# EUROPEAN PATENT SPECIFICATION

(11) **EP 1 196 958 B1**
(45) Date of publication and mention of the grant of the patent: **02.04.2003**
(21) Application number: 00942284.1
(22) Date of filing: 04.07.2000
(51) Int. Cl.: H01M 8/02

(54) **FLOW FIELD PLATES**
FLÜSSIGKEITSVERTEILUNGSPLATTE
PLAQUES DE CHAMP D'ECOULEMENT

(30) Priority: 08.07.1999 GB 9915925
(43) Date of publication of application: 17.04.2002
(73) Proprietor: LOUGHBOROUGH UNIVERSITY INNOVATIONS LIMITED, Loughborough, Leicestershire LE11 3TF (GB)
(72) Inventor: ROWEN, Stuart James, London, Greater London W1V 5LR (GB); TURPIN, Mark Christopher, Loughborough, Leicestershire LE12 6PU (GB); ADCOCK, Paul Leonard, Loughborough, Leicestershire LE12 5DW (GB); Davies Damien, Netwark Nottinghamshire NG24 3GA (GB)
(74) Representative: Gallafent, Richard John
(86) International application number: GB0002591
(87) International publication number: WO01004982

(56) References cited:
- US-A- 5 284 718
- US-A- 5 527 363
- US-A- 5 858 567
- HASHISH M: "MACHINING OF ADVANCED COMPOSITES WITH ABRASIVE-WATERJETS" MANUFACTURING REVIEW,US,AMERICAN SOCIETY OF MECHANICAL ENGINEERS, NEW YORK, vol. 2, no. 2, 1 June 1989 (1989-06-01), pages 142-150, XP000047143 ISSN: 0896-1611

## Description

This invention relates to flow field plates and the manufacture thereof, for use in fuel cells, electrolysers, and batteries which contain a fluid electrolyte.

A fuel cell is an electrochemical device in which chemical energy is converted directly into electrical energy. Fuel cells employ electrodes, comprising an anode and a cathode, electrocatalysts, often supported on the electrodes, and an electrolyte. A fuel and an oxidant are separately supplied to the anode and cathode, respectively.

Solid Polymer Fuel cells (SPFC) employ a membrane electrode assembly (MEA), consisting of a solid polymer electrolyte with impressed electrocatalyst layers sandwiched between two electrically conductive plates which have a fluid flow field to distribute the fuel and oxidant across the active area of the electrodes. These flow field plates, also known as current collector plates or bipolar plates, may additionally provide mechanical support for the MEA. Fluid galleries are formed in the faces of the flow field plates to direct fuel and oxidant, respectively, into the fluid flow field. Fluid exit galleries in the flow field plates allow for removal of unreacted fuel and oxidant as well as reaction product (e.g. water in an oxygen/hydrogen fuel cell) formed at the cathode.

Performance of fuel cells is partly dependent on the efficient supply of fuel and oxidant to the electrodes and also the efficient removal of reaction product during functioning of the cell. The design and manufacture of flow fields on flow field plates is thus an important consideration for optimal fuel cell operation.

For most applications, fuel cells may be connected is series to form a "stack" so that voltage output is increased. The flow field plates between cells may be bipolar such that fuel and oxidant are distributed separately through flow fields on opposite faces of the plate. In stacks, flow field plates should be impermeable to reactants to prevent crossover between adjacent cells.

Flow field plates used in fuel cell stacks have been constructed from several types of material. This material requires the following properties:
(i) chemical compatibility with electrolytes;
(ii) low resistivity (contact and bulk) to reduce power loss;
(iii) impermeability to H₂ and O₂;
(iv) allows for easy manufacture of plates;
(v) light in weight; and
(vi) sufficient strength to withstand handling and high compaction pressures.

Carbon-based flow field plates have been reported for use in low temperature fuel cells, particularly SPFCs. Carbon is an excellent material for this application, possessing excellent chemical resistance, low density and high electronic and thermal conductivity.

Press-moulding has been used to fabricate a flow field plate, complete with embossed fluid flow design thereon, from exfoliated graphite. For example, a flow field plate manufactured from a fine grained graphite (GRAFOIL®) is provided in US 5 521 018.

US 4 301 222 and EP 784 352 describe the use of resins to form plates with improved mechanical strength, but these insulating resins may reduce the overall conductivity of such plates and result in increased losses in fuel cell stacks. In another invention, US 4 339 322, carbon fibres have been added to a polymer/graphite material to enhance plate strength and conductivity. However, resistivities of the plates disclosed in US 4 339 322 are significantly higher than plate manufactured only from graphite.

As described in US 5 686 199, it is possible to machine fine grained graphite plates to form fluid flow patterns. Due to low mechanical strength of the material, however, these plates are often unacceptably thick. Also, the machining of fluid flow fields on carbon plates is a slow process and tool wear is rapid with this material. Carbon fibre composite materials are even more abrasive and more damaging to cutting tools than standard carbon material. These material have been avoided due to the costly specialised equipment employed.

Current technology therefore does not provide a rapid, low cost process for the manufacture of flow field plates from desirable materials.

The technique of sand, bead, or grit blasting has been described previously for a few specified applications, such as signmaking and decorative patterning on stone, wood, ceramicware, plastic, glass and glass-reinforced plastic (e.g. US 4 828 893 and US 4 985 101), and surface cleaning or roughening treatments. Sandblasting has also been employed for forming plasma display apparatus (EP 0 722 179) and in the manufacture of magnetic transducing heads (US 4 188 247).

The present invention provides a novel, effective and improved method for the manufacture of electrochemical cell components such as the flow field plate. The method employs a low cost and rapid erosive etch that allows formation of fluid flow patterns, fluid entry galleries and fluid exit galleries, and sealing grooves.

Thus according to the present invention, there is provided a method for the manufacture of flow field plates by sand blasting, bead blasting, or grit blasting, in which a particulate etchant-resistant patterned mask is used, so that a fluid flow pattern determined by the pattern design on said mask is formed on said plate material.

Plate material for use in the present invention may comprise electrically conductive material. Such electrically conductive material may comprise carbon-based material. Furthermore, plate material may comprise carbon fibre composite material. This carbon fibre composite material may be densified with a polymeric filler, for example an epoxy resin. It has been found, surprisingly, that the rate of particluate etching of the carbon fibre and matrix in carbon fibre composite material does not differ, so the final structure of patterned grooves formed in this type of materials is not adversely affected.

The particulate etching may comprise sand blasting, and the particulate etchant accelerator may comprise a sandblasting gun. The particulate etching may also comprise grit blasting. The invention requires that the particulate etchant contains an abrasive medium which has a greater hardness than that of the plate material to be etched. The particulate etchant may be silica grit with a diameter of 180-220 µm for use against plate material which is a graphitised carbon-carbon composite material.

The procedure uses a particulate etchant-resistant mask which is patterned accordingly and which covers the face of the material to be etched. The mask may be composed of material that can withstand erosive wear caused by particulate etching. The mask should be in close proximity to the plate material to allow fine detailed patterns to be formed, so the mask may be held in contact with the plate material by means of an adhesive substance.

The particulate etchant-resistant patterned mask may be a photoresist mask. The technique of forming a photoresist mask is taught in, for example, US 4 764 449. In US 4 764 499, a negative mask of the required design is formed such that glass or wood exposed after adhesion of the mask is eroded by sandblasting.

The particulate etchant-resistant patterned mask may comprise a vinyl polymer. Here, a vinyl label is cut to shape to form a negative mask of the required pattern (see US 4 828 893).

The pattern design may determine a fluid entry gallery and a fluid exit gallery of the field flow plate. For example, a fluid entry gallery may be a fluid entry hole and a fluid exit gallery may be a fluid exit hole of the flow field plate. Certain etch resists could fail if galleries passing through the plate are etched through one face only. Therefore fluid entry galleries and fluid exit galleries may be formed by etching aligned positions on opposite faces of the flow field plate.

The pattern design may also determine grooves for seals on said flow field plate.

Particulate etching may be under the control of a two-axis scanning mechanism that determines movement of the particulate etchant accelerator relative to the plate material. The two-axis scanning mechanism may enable a predetermined movement of the plate material relative to the particulate etchant accelerator such movement can be in the form of a raster pattern or a stepped scan pattern. A scanning mechanism will be particularly useful when the surface area of the plate material is approaching or greater than the spread of particulate from the particulate etchant accelerator.

Flow field plate manufactured according to the present invention may be incorporated in fuel cells, electrolysers, and batteries which contain a fluid electrolyte. An electrolyser, which is a means to decompose water into hydrogen and oxygen, is structurally very similar to a fuel cell.

The invention will be further apparent from the following description, with reference to the several figures of the accompanying drawings, which show, by way of example only, methods for the manufacture of field flow plates comprising different materials.

Of the Figures:
- Figure 1: is a schematic side cross-sectional elevation illustrating the particulate etching method employed in the fabrication of fluid flow grooves on a bipolar flow field plate; and
- Figure 2: is a schematic side cross-sectional elevation illustrating the particulate etching method employed in the fabrication of a fluid entry or exit hole in a flow field plate.

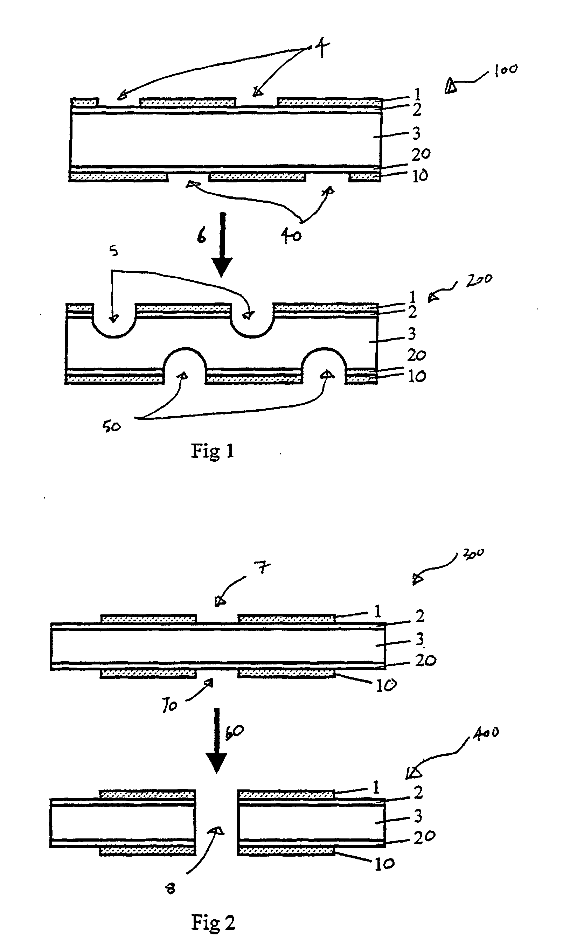

In Figure 1, a flow field plate 100 prepared for particulate etching comprises the plate material 3, and two opposite faces each layered with an adhesive 2 and 20 upon which the prepared particular enchant-resistant patterned masks 1 and 10 have been attached. The adhesive 2 and 20 must provide sufficient adhesion to hold the masks 1 and 10 firmly in place during the particulate etching process 6. Preferably, the adhesive 2 and 20 is water soluble so that the masks 1 and 10 can be easily removed from the plate material 3 after etching. The masks 1 and 10 may be mounted on a support film which is peeled away after the masks 1 and 10 have adhered to the adhesive 2 and 20.

Plate material 3 comprises carbon fibre composites, thereby possessing superior mechanical properties to monoliths, without loss of mechanical properties. The inclusion of carbon fibres can improve the thermal conductivity of plate material 3, which is an important feature if the downstream electrical application involves use of high current densities. Fabrication methods for typical carbon-carbon composite material are well known (See Thomas, C.R. [Editor], 1993, Essentials of carbon-carbon composites, Cambridge Royal Society of Chemistry Press, Cambridge, ISBN: 0851868045).

Use of high density carbon-carbon composites for plate material 3 is expensive, and partially densified materials may offer greater prospects. The gas permeability of partially densified plate material can be overcome by densification with a polymeric filler such as resin. The resin should preferably be of low viscosity to allow the rapid filling of small pores under low pressure, and should self-cure. The composition of the resin may be of any polymer formulation that will resist attack by an alkaline or acidic electrolyte. Immediately after the addition of a resin to plate material 3, unabsorbed resin should be removed from the surface of the plate 100. This can be carried out by wiping the plate 100 surface with an absorbent cloth. When the resin has been allowed to cure under the required conditions, surfaces on plate 100 required for electrical conduction need to be cleaned to re-expose conductive carbon in plate material 3 . This can be achieved by a brief surface grinding step with an abrasive cloth with a mesh size of 600 or higher.

The particulate etchant-resistant patterned masks 1 and 10 have patterns 4 and 40 through which the plate material 3 will be etched. Pattern 4 on one face of plate material 3 is displaced relative to pattern 40 on the second face of plate material 3 so that a thin sheet of plate material 3 can be employed. Etching process 6 involves the exposure of the plate 100 to a particulate etchant (not shown) which is propelled by a particulate etchant accelerator (not shown) such as a sandblasting gun. The particulate etchant is any material which has a greater hardness than that of the plate material 3 to be etched. For carbonaceous materials (except diamonds), it is preferred that fine grained silica or alumina is used. The etchant size depends on the detail of the patterns 4 and 40 required on the plate 100.

The blasting pressure used in process 6 is dependent on masks 1 and 10, the adhesive 2 and 20, the distance between the etchant accelerator and the target surface of the plate material 3, and the etchant used. An upper pressure limit is given by the resistance to erosive etching of the masks 1 and 10, while a lower limit is defined by the pressure required to erode the material 3 with the abrasive etchant. The blasting pressure is optimal when substantial etching is produced within a reasonable time limit without damaging the masks 1 and 10 or causing the adhesive 2 and 20 to fail.

Etching process 6 is performed in two successive steps in which each face of plate 100 is etched. It is not ruled out, however, that the etching process 6 could be performed on both sides of plate 100 simultaneously using a plurality of particulate etchant accelerators.

During etching process 6, the target area of plate 100 is dependent on the spread of the etchant. This spread, in turn, is dependent on the distance of the particulate etchant accelerator from the surface of plate 100, and the dimensions of the particulate etchant accelerator nozzle (not shown). The plate 100 can be etched in a dynamic manner if the area of plate 100 is larger than the etchant spread. For example, the particulate etchant accelerator and plate 100 can be moved relative to each other using a two-axis scanning mechanism, in which either or both the accelerator and plate 100 are moved. The overall movement should provide uniform coverage of the plate 100 surface with the accelerated etchant.

After completion of etching process 6, the flow field plate 200 has a fluid flow field pattern 5 and 50 etched into the plate material 3 on both sides of the plate 200. The adhesive 2 and 20 and particulate etchant-resistant patterned mask 1 and 10 are then removed.

The fabrication of flow field plate holes for the entry or exit of fluids is illustrated in Figure 2. Preparation of flow field plate 300 requires the alignment of eroding grooves 7 and 70 patterned into the particulate etchant-resistant masks 1 and 10 on opposite faces of the plate material 3. The masks 1 and 10 are held firmly against the plate material 3 using an adhesive 2 and 20. Etching process 60 proceeds until a uniform opening 8 appears from one face of plate 400 through to the opposite face. Etching of both faces of plate material 3 to form the opening 8 is especially important where the material 3 would fail if etched from one face only.

The present invention will be further described by way of the following examples. The scope of the invention, however, is not limited in any way by these examples.

### Example 1 (Carbon-carbon composite plate + vinyl mask):

A graphitised carbon-carbon composite plate of dimensions 50x50x1.2 mm was prepared with a gas track design on one face. A vinyl-polymer adhesive mask (FasCal Film [Avery, US]), with a negative image of the required gas track design, was pressed firmly onto the composite. A Guyson Blast System (Guyson, UK) with 180-220 µm silica grit, was used to dry sandblasting the plate. The masked material was held under the sandblasting gun with a blast pressure set at 4 bar (400 kPa) for 30s, at a constant distance of 6" (152.4 mm). The vinyl mask was then peeled off, and the adhesive washed off the plate using isopropyl alcohol. Track depth was 0.2-0.25 mm.

### Example 2 (Carbon-carbon composite plate + photoresist mask):

A graphitised carbon-carbon composite plate of dimensions 50x50x1.2 mm was prepared with a gas track design on one face. A photoresist mask (ImagePro Super Film [Chromaline Corp., US]) was developed to form a negative template of the required gas track design. Using a photographic mask of the track design to cover the photoresist (with an underside protective carrier film) and a glass sheet to hold the sheets closely together, the film was exposed for 5 minutes to an 18 W UV light source, at a distance of 5 m. The film was then removed (under yellow light) and washed under running water for approximately 3 minutes in order to wash away unexposed resist. The resist film was dried in air, under normal lighting, to form the negative resist mask template. A liquid contact adhesive (ImagePro Adhesive [Chromaline Corp., US]) was brushed lightly over the composite plate surface, and allowed to dry in air for 10 minutes. The resist mask (with carrier film) was pressed onto the adhesive-covered plate, and the carrier film peeled away. The material was then blasted using the procedure described in Example 1 (*supra*). The resist mask was removed by dissolving the adhesive using warm running water, thus revealing a flow field pattern etched into the carbon-carbon composite material.

### Example 3 (Carbon-carbon composite plate with epoxy resin + photoresist mask):

A graphitised carbon-carbon composite plate of dimensions 50x50x1.2 mm was held under low pressure (preferably less than 10 mmHg [approximately 1.33 kPa], but up to 100 mmHg [approximately 13.3 kPa] feasible) impregnated with a low viscosity epoxy resin (SpeciFix-20 [Struers Ltd, UK]). Excess resin was removed from the surface of the plate using a paper towel. The plate was then allowed to stand in air, at standard temperature and pressure, for at least 8 hours to allow the resin to cure and harden. A photoresist mask (ImagePro Super Film) was prepared and then applied as in Example 2 *(supra).* The masked material was then blasted using the procedure described in Example 1 (*supra*). The resist mask was removed by dissolving the adhesive using warm running water.

## Claims

1. A method for the manufacture of flow field plates by sand blasting, bead blasting, or grit blasting, in which a particulate etchant-resistant patterned mask is used, so that a fluid flow pattern determined by the pattern design on said mask is formed on said plate material.

2. A method according to claim 1, in which said plate material comprises electrically conductive material.

3. A method according to claim 1 or 2, in which said plate material comprises carbon-based material.

4. A method according to claim 3, in which said plate material comprises carbon fibre composite material.

5. A method according to claim 4, in which said carbon fibre composite material is densified with a polymeric filler.

6. A method according to any one of claims 1 to 5, in which a sandblasting gun is used as a particulate etchant accelerator.

7. A method according to any of claims 1 to 6, in which the sand, bead or grit material has a greater hardness than that of said plate material.

8. A method according to claim 7, in which the sand, bead or grit material is silica grit with a diameter of 180-220 µm.

9. A method according to claim 8, in which said plate material is a graphitised carbon-carbon composite material.

10. A method according to claim 1, in which said particulate etchant-resistant patterned mask is held in contact with said plate material, by means of an adhesive substance.

11. A method according to claim 1, in which said particulate etchant-resistant patterned mask is a photoresist mask.

12. A method according to claim 1, in which said particulate etchant-resistant patterned mask comprises a vinyl polymer.

13. A method according to claim 1, in which said pattern design determines a fluid entry gallery and a fluid exit gallery on said flow field plate.

14. A method according to claim 13, in which said fluid entry gallery and said fluid exit gallery are formed by etching aligned positions on opposite faces of said flow field plate such that said fluid entry gallery and said exit gallery pass through said flow field plate.

15. A method according to clam 1, in which said pattern design determines a sealing groove on said flow field plate.

16. A method according to claim 1, in which said sand, bead, or grit blasting is under control of a two-axis scanning mechanism that determines movement of a particulate etchant accelerator, for said sand beads or grit, relative to said plate material.

17. A method according to claim 16, in which said two-axis scanning mechanism enables a predetermined movement of said plate material relative to said particulate etchant accelerator such that said movement is in the form of a raster pattern or a stepped scan pattern.

## Patentansprüche

1. Verfahren zum Herstellen von Strömungsfeldplatten durch Sandstrahlen, Kugelstrahlen oder Schleifkornstrahlen, bei dem eine partikuläre ätzmittelfeste Strukturmaske verwendet wird, so dass eine Fluidstromstruktur, die durch die Strukturgestaltung auf der Maske bestimmt wird, auf dem Plattenmaterial ausgebildet wird.

2. Verfahren nach Anspruch 1, bei dem das Plattenmaterial ein elektrisch leitfähiges Material umfasst.

3. Verfahren nach Anspruch 1 oder 2, bei dem das Plattenmaterial ein auf Kohlenstoff basierendes Material umfasst.

4. Verfahren nach Anspruch 3, bei dem das Plattenmaterial ein Kohlenstofffaserverbundmaterial umfasst.

5. Verfahren nach Anspruch 4, bei dem das Kohlenstofffaserverbundmaterial mit einem polymeren Füllstoff verdichtet ist.

6. Verfahren nach einem der Ansprüche 1 bis 5, bei dem eine Sandstrahlpistole als partikulärer Ätzmittelbeschleuniger verwendet wird.

7. Verfahren nach einem der Ansprüche 1 bis 6, bei dem das Sand-, Kugel- oder Schleifkornmaterial eine größere Härte besitzt als das Plattenmaterial.

8. Verfahren nach Anspruch 7, bei dem das Sand-, Kugel- oder Schleifkornmaterial ein Quarzsand mit einem Durchmesser von 180 - 220 µm ist.

9. Verfahren nach Anspruch 8, bei dem das Plattenmaterial ein Verbundmaterial aus turbostratischem Graphit und Kohlenstoff ist.

10. Verfahren nach Anspruch 1, bei dem die partikuläre ätzmittelfeste Strukturmaske mit dem Plattenmaterial mittels einer adhäsiven Substanz in Kontakt gehalten wird.

11. Verfahren nach Anspruch 1, bei dem die partikuläre ätzmittelfeste Strukturmaske eine Photoresistmaske ist.

12. Verfahren nach Anspruch 1, bei dem die partikuläre ätzmittelfeste Strukturmaske ein Vinylpolymer umfasst.

13. Verfahren nach Anspruch 1, bei dem die Leiterbildgestaltung einen Fluideintrittskanal und einen Fluidaustrittskanal auf der Strömungsfeldplatte bestimmt.

14. Verfahren nach Anspruch 13, bei dem der Fluideintrittskanal und der Fluidaustrittskanal gebildet werden, indem ausgerichtete Positionen an entgegengesetzten Flächen der Strömungsfeldplatte derart geätzt werden, dass der Fluideintrittskanal und der Fluidaustrittskanal durch die .. Strömungsfeldplatte hindurchgehen.

15. Verfahren nach Anspruch 1, bei dem durch die Strukturgestaltung eine Dichtungsnut auf der Strömungsfeldplatte bestimmt ist.

16. Verfahren nach Anspruch 1, bei dem das Sand-, Kugel- oder Schleifkornstrahlen unter der Steuerung eines um zwei Achsen beweglichen Abtastmechanismus stattfindet, der die Bewegung eines partikulären Ätzmittelbeschleunigers für das Sand-, Kugel- oder Schleifmaterial bezüglich des Plattenmaterials bestimmt.

17. Verfahren nach Anspruch 16, bei dem der um zwei Achsen bewegliche Abtastmechanismus eine vorbestimmte Bewegung des Plattenmaterials bezüglich des partikulären Ätzmittelbeschleunigers derart bestimmt, dass die Bewegung in der Form eines Rastermusters oder eines schrittweisen Abtastmusters stattfindet.

## Revendications

1. Procédé pour la fabrication de plaques de champ d'écoulement par décapage au sable, décapage à la perle, ou décapage à l'abrasif, dans lequel un masque à motifs résistant à un réactif de gravure particulaire est utilisé, de sorte qu'un motif d'écoulement de fluide déterminé par la conception de motif sur ledit masque est formé sur ledit matériau de plaque.

2. Procédé selon la revendication 1, dans lequel ledit matériau de plaque comporte un matériau électriquement conducteur.

3. Procédé selon la revendication 1 ou 2, dans lequel ledit matériau de plaque comporte un matériau à base de carbone.

4. Procédé selon la revendication 3, dans lequel ledit matériau de plaque comporte un matériau composite de fibres de carbone.

5. Procédé selon la revendication 4, dans lequel ledit matériau composite de fibres de carbone est densifié par une charge polymère.

6. Procédé selon l'une des revendications 1 à 5, dans lequel un canon de décapage au sable est utilisé en tant qu'accélérateur de réactif de gravure particulaire.

7. Procédé selon l'une des revendications 1 à 6, dans lequel le matériau de sable, de perle ou d'abrasif a une dureté supérieure à celle dudit matériau de plaque.

8. Procédé selon la revendication 7, dans lequel le matériau de sable, de perle ou d'abrasif est un abrasif de silice ayant un diamètre de 180 à 220 µm.

9. Procédé selon la revendication 8, dans lequel ledit matériau de plaque est un matériau composite de carbone-carbone graphité.

10. Procédé selon la revendication 1, dans lequel ledit masque à motifs résistant à un réactif de gravure particulaire est maintenu en contact avec ledit matériau de plaque, par l'intermédiaire d'une substance adhésive.

11. Procédé selon la revendication 1, dans lequel ledit masque à motifs résistant à un réactif de gravure particulaire est un masque de réserve photosensible.

12. Procédé selon la revendication 1, dans lequel ledit masque à motifs résistant à un réactif de gravure particulaire comporte un polymère vinylique.

13. Procédé selon la revendication 1, dans lequel ladite conception de motif détermine une galerie d'entrée de fluide et une galerie de sortie de fluide sur ladite plaque de champ d'écoulement.

14. Procédé salon la revendication 13, dans lequel ladite galerie d'entrée de fluide et ladite galerie de sortie de fluide sont formées en gravant des positions alignées sur des faces opposées de ladite plaque de champ d'écoulement de sorte que ladite galerie d'entrée de fluide et ladite galerie de sortie passent à travers ladite plaque de champ d'écoulement.

15. Procédé selon la revendication 1, dans lequel ladite conception de motif détermine une gorge d'étanchéification sur ladite plaque de champ d'écoulement.

16. Procédé selon la revendication 1, dans lequel ledit décapage au sable, à la perle ou l'abrasif est sous commande d'un mécanisme de balayage à deux axes qui détermine un déplacement d'un accélérateur de réactif de gravure particulaire, pour ledit sable, lesdites perles ou ledit abrasif, par rapport audit matériau de plaque.

17. Procédé selon la revendication 16, dans lequel ledit mécanisme de balayage à deux axes permet un déplacement prédéterminé dudit matériau de plaque par rapport audit accélérateur de réactif de gravure particulaire de sorte que ledit déplacement prend la forme d'un motif tramé ou d'un motif de balayage pas-à-pas.
